# EUROPEAN PATENT APPLICATION

(11) **EP 2 767 864 A1**
(43) Date of publication of application: **20.08.2014**
(21) Application number: 12851419.7
(22) Date of filing: 06.11.2012
(51) Int. Cl.: G02F 1/13, C03C 15/00, C03B 23/023

(54) **ETCHING DEVICE, CURVED DISPLAY PANEL MANUFACTURING APPARATUS COMPRISING SAME, METHOD FOR MANUFACTURING CURVED DISPLAY PANEL USING SAME, AND CURVED DISPLAY PANEL MANUFACTURED BY SAME**

(30) Priority: 24.11.2011 KR 20110123412
(71) Applicant: Tovis Co., Ltd., Yeonsu-gu, Incheon 406-840 (KR)
(72) Inventor: KIM, Yong-Beom, Incheon 406-840 (KR)
(74) Representative: Manitz, Finsterwald & Partner GbR
(86) International application number: PCT/KR2012/009280
(87) International publication number: WO 2013/077570

(57) **Abstract**

The present invention provides a curved display manufacturing method which can prevent phenomenon that outer surface edges of substrates are broken or pared unevenly while etchant is being injected, a curved display panel manufacturing using the same, and a curved display panel manufactured by the same. For this, a curved display panel manufacturing apparatus includes: an etching portion for partially paring outer portions of a first substrate and a second substrate such that thicknesses thereof are reduced to predetermined thicknesses; and a bending portion for bending the partially pared flat liquid crystal panel to a desired curved shape. The etching portion includes: at least one edge protection cover which is disposed on outer surface edge of the first substrate and the second substrate; and an injection nozzle which injects etchant to outer surfaces of the first substrate and the second substrate and to the edge protection cover.

## Description

### [Field of the Invention]

The present invention relates to an etching device, a curved display panel manufacturing apparatus including the same, a curved display panel manufacturing method using the same, and a curved display panel manufactured by the method.

### [Background Art]

Various display devices have been developed and are being used. A liquid crystal display device which realizes images using liquid crystal is widely used.

Generally, a liquid crystal display (LCD) includes two display panels and a liquid crystal layer disposed therebetween and having a dielectric anisotropy. An electric filed is formed in the liquid crystal layer, and a transmittance of light passing the liquid crystal layer is regulated by regulating amplitude of the electric field so as to obtain a desired image. Such a liquid crystal display is representative one of a flat panel display (FPD), and TFT-LCD which uses thin film transistor (TFT) as a switching element is widely used.

A plurality of display signal lines i.e., gate lines and data lines, a plurality of thin film transistors and pixel electrodes are formed on a lower display panel of the two display panels of the liquid crystal display panel, and a color filter and a common electrode are formed on a upper display panel.

Such a liquid crystal display panel is generally manufactured in a flat shape, so the conventional liquid crystal display panel cannot be used as a curved display. Accordingly, in order to solve this problem, the applicant has disclosed a method for manufacturing a display panel having a curved shape in Korea Patent Publication No.2011-0030732 and Korea Patent Publication No.2011-0100537.

In detail, a method for manufacturing a display panel having a curved shape disclosed in Korea Patent Publication No.2011-0100537 forms a display panel having a desired curved shape using a flat display panel having a first substrate and a second substrate facing one another, and includes paring partially outer portions of the first and the second substrates so as to reduce thicknesses thereof to predetermined thicknesses, bending the pared flat liquid crystal panel to a desired curved shape, attaching a first guide member and a second guide member which are formed to have shapes corresponding to the desired curved shape to the pared outer surfaces of the first and the second substrates with predetermined gap therebetween, and forming light transmitting reinforcing layers respectively in a space between the first guide member and the first substrate and a space between the second guide member and the second substrate. At this time, in the step of paring partially the outer portions, a method for paring the first substrate and the second substrate may be a mechanical polishing method or an etching method of injecting etchant.

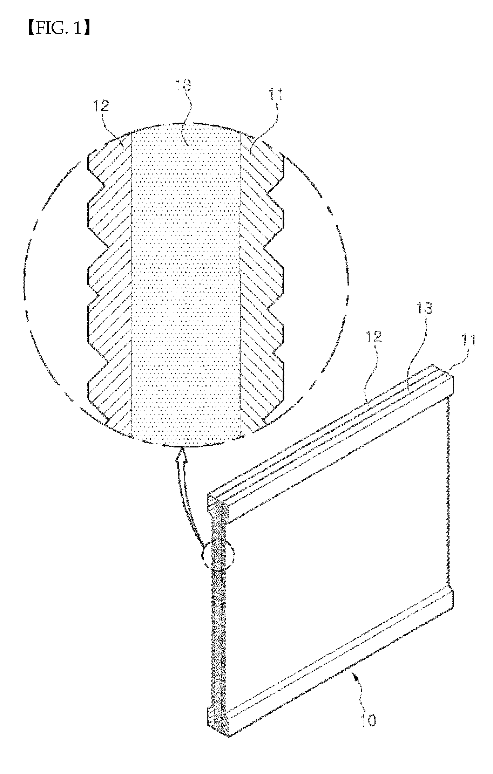

However, in the process of paring the outer portions of the first and the second substrates by injecting etchant in a method of manufacturing a display panel having a curved shape, as shown in FIG. 1, edges of the substrates which are relatively weak can be broken or pared unevenly, and this may cause defects in a liquid crystal display panel.

### [Detailed Description of the Invention]

### [Technical Problem]

The present invention has been made in an effort to provide an etching device which can prevents phenomenon that outer surface edges of substrates are broken or pared unevenly while etchant is being injected.

The present invention has also been made in an effort to provide a curved display manufacturing apparatus which can prevent phenomenon that outer surface edges of substrates are broken or pared unevenly while etchant is being injected, a curved display panel manufacturing using the same, and a curved display panel manufactured by the same.

### [Technical Solution]

An etching device according to an exemplary embodiment of the present invention includes: at least one edge protection cover which is positioned at outer surface edge of a first substrate and a second substrate; and an injection nozzle which injects etchant to outer surfaces of the first substrate and the second substrate and to the edge protection cover.

The edge protection cover may be made of porous material. In more detail, the edge protection cover may be made of carbon fiber mesh.

The at least one edge protection cover may include: a first protection cover which covers both one outer surface edge of the first substrate and corresponding one outer surface edge of the second substrate at the same time; and a second protection cover which covers both the other outer surface edge of the first substrate which faces the one outer surface edge and corresponding the other outer surface edge of the second substrate at the same time.

Meanwhile, a curved display panel manufacturing apparatus according to an exemplary embodiment of the present invention includes: an etching device (hereinafter referred to "etching portion") for partially paring outer portions of a first substrate and a second substrate to reduce thicknesses thereof to predetermined thicknesses; and a bending portion for bending the partially pared flat liquid crystal panel to a desired curved shape, and the etching portion includes: at least one edge protection cover which is disposed on outer surface edge of the first substrate and the second substrate; and an injection nozzle which injects etchant to outer surfaces of the first substrate and the second substrate and to the edge protection cover.

Meanwhile, a curved display panel manufacturing method using a curved display panel manufacturing apparatus according to an embodiment of the present invention includes: positioning the edge protection cover to the edges of the first and the second substrates; paring partially outer portions of the first substrate and the second substrate so as to reduce thicknesses thereof to predetermined thicknesses; and bending the partially pared flat liquid crystal panel by the bending portion to a desired curved shape.

Meanwhile, a curved display panel is manufactured by a curved display panel manufacturing apparatus including an etching device according to an embodiment of the present invention and a curved display panel manufacturing method using the same.

### [Advantageous Effects]

As such, an etching device according to an embodiment of the present invention, a curved display panel manufacturing apparatus including the same, a curved display panel manufacturing method using the same, and a curved display panel manufactured by this may have following effects.

According to an embodiment of the present invention, since the edge protection cover is provided at outer surface edge of the substrates and the injection nozzle for injecting etchant toward the edge protection cover and portions of the outer surfaces of the substrates, when the etchant is injected through the injection nozzle, the etchant which is injected onto the portion of the outer surfaces of the substrates is being injected in a state of maintaining its injection speed, and the etchant which is injected onto the outer surface edge which is covered by the edge protection cover is being injected in a speed which is reduced by the edge protection cover, so while the outer portions of the substrates are effectively pared, it can be prevented that the outer surface edges of the substrates are destroyed or unevenly pared. Accordingly, defects of the curved display panel due to this can be minimized.

### [Brief Description of Drawings]

FIG. 1 is a perspective view of a first substrate and a second substrate which are pared in an etching step of a conventional manufacturing method of a curved display panel.
FIG. 2 is a perspective view schematically showing an etching device according to an embodiment of the present invention.
FIG. 3 is a perspective view of a first protection cover and a second protection cover of an etching device according to an embodiment of the present invention.
FIG. 4 is a flowchart of a method of manufacturing a curved display panel using a curved display panel manufacturing apparatus including an etching device according to an embodiment of the present invention.
FIG. 5 is a perspective view showing a process of positioning a first protection cover and a second protection cover to outer edges of a substrate.
FIG. 6 is a perspective view of a liquid crystal display panel which has been etched in a state of being provided with a first protection cover and a second protection cover.
FIG. 7 is a sectional view showing a bended state of a liquid crystal panel by a bending unit.
FIG. 8 is a sectional view showing processes for attaching a first guide member, a second guide member and a polarizer to a bended liquid crystal panel.
FIG. 9 is a sectional view showing a process of injecting light transmitting reinforcing material to a side spacer.
FIG. 10 is a perspective view schematically showing a curved display pan el which is produced by an etching device according to an embodiment of the present invention, a curved display panel manufacturing apparatus including the same and a curved display panel manufacturing method using the same.

### [Detailed Description of the Embodiments]

Embodiments of the present invention will be explained in detail with reference to the accompanying drawings. However, the present invention can be realized variously, and is not limited to the described embodiments.

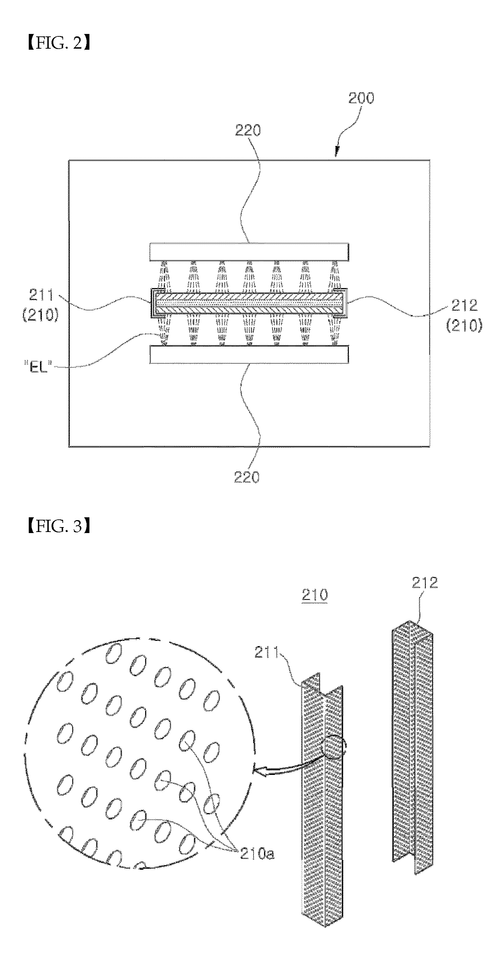

FIG. 2 is a perspective view schematically showing an etching device according to an embodiment of the present invention, and FIG. 3 is a perspective view of a first protection cover and a second protection cover of an etching device according to an embodiment of the present invention.

An etching device 200 according to an embodiment of the present invention, as shown in FIG. 2 and FIG. 3, includes at least one edge protection cover 210 which is disposed at an outer surface edge of a first substrate 110 and a second substrate 120 and an injection nozzle 220 which injects etching liquid (i.e., etchant) EL onto an outer surface of the first and the second substrates 110 and 120 and the edge protection cover 210.

The edge protection cover 210 may be formed a porous member having a plurality of openings 210a. In more detail, the edge protection cover 210 may be formed of a carbon fiber mesh. Since a plurality of openings 210a are formed in the edge protection cover 210, the etchant EL injected from the injection nozzle 220 is injected through the opening 210a onto the outer surface edge of the substrates 110 and 120 where the edge protection cover 210 is positioned, while being slowed down by the edge protection cover 210, so the etching can be performed in a state that the outer surface edges of the substrates 110 and 120 which are relatively weak are not destroyed and are not pared unevenly.

Further, the at least one edge protection cover 210 may include a first edge protection cover 211 which covers both one outer surface edge (left edge in the drawing) of the first substrate 110 and corresponding one outer surface edge (left edge in the drawing) of the second substrate 120, and a second edge protection cover 212 which covers both other outer surface edge (right edge in the drawing) of the first substrate 110 opposite the one outer surface edge thereof and corresponding other outer surface edge (right edge in the drawing) of the second substrate 120. Accordingly, since the one edge of the first substrate 110 and the one edge of the second substrate 120 are protected at the same time, manufacturing time and cost can be reduced. In addition, since the other edge of the first substrate 110 and the other edge of the second substrate 120 are protected at the same time, manufacturing time and cost can be reduced.

Referring to FIG. 2, FIG. 3 and FIG. 7, a curved display panel manufacturing apparatus including the etching device 200 will be described hereinafter.

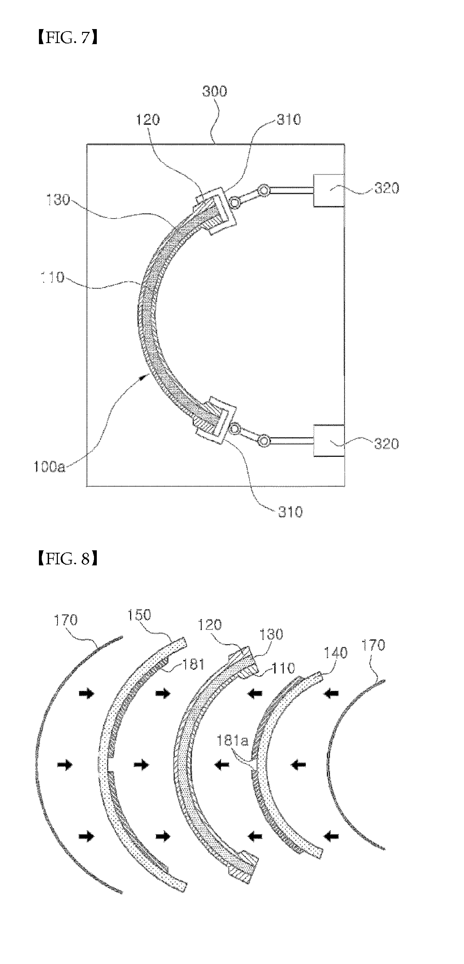

The curved display panel manufacturing apparatus, as shown in FIG. 2, FIG. 3 and FIG. 7, includes the etching device 200 (hereinafter referred to as "etching portion") for paring partially an outer portion of the first and the second substrates 110 and 120 respectively so as to reduce thickness thereof to predetermined thicknesses and a bending portion (indicated by reference numeral 300 in FIG. 7) for bending the pared liquid crystal panel 100a to a desired curved.

Here, not shown in the drawing, the etching portion 200 and the bending portion 300 may be disposed within one working chamber (not shown), or may be disposed within respective working chambers. Further, in case that the etching portion 200 and the bending portion 300 are separately disposed within respective working chambers, a transmitting unit (not shown) such as a transmitting arm or a conveyor belt can connect both working chambers.

The bending portion 300 may include a holding portion (indicated by reference numeral 310 in FIG. 7) for holding the panel 100a and a driving portion (indicated by reference numeral 320 in FIG. 7) for providing bending force to the panel 100a. At this time, the bending portion 300 is not limited thereto and can be varied.

The etching portion 200 is identical to the etching device according to an embodiment of the present invention, so explanation for the same will be omitted.

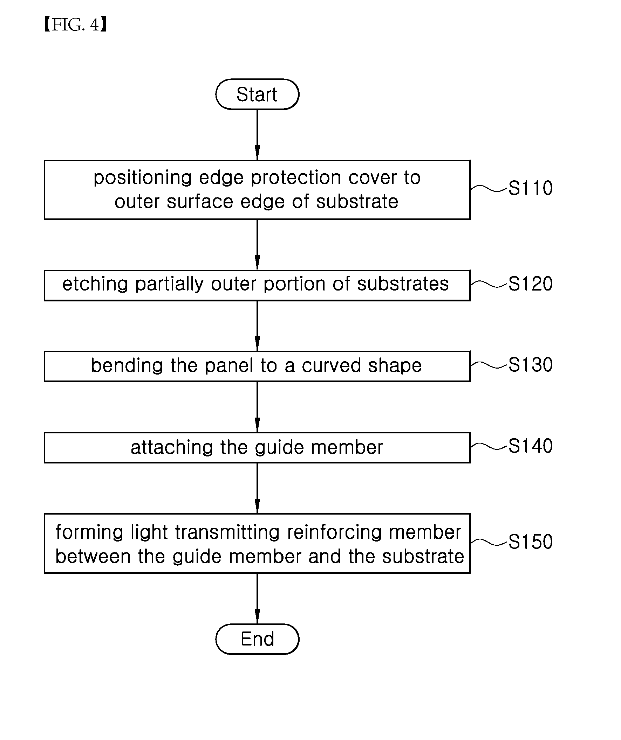

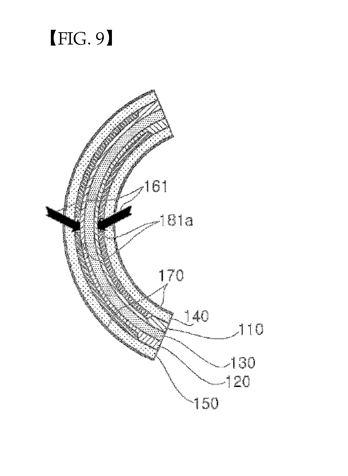

Hereinafter, referring to FIG. 4 and FIG. 9, a method for manufacturing a curved display panel using a curved display panel manufacturing apparatus including an etching device according to an embodiment of the present invention will be explained in detail.

FIG. 4 is a flowchart of a method of manufacturing a curved display panel using a curved display panel manufacturing apparatus including an etching device according to an embodiment of the present invention.

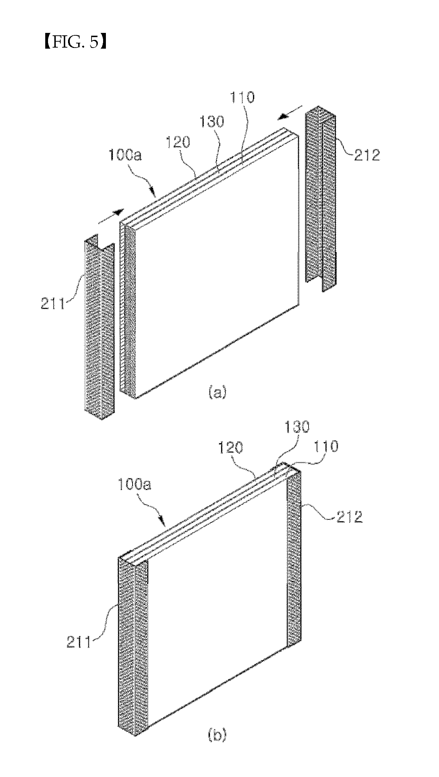

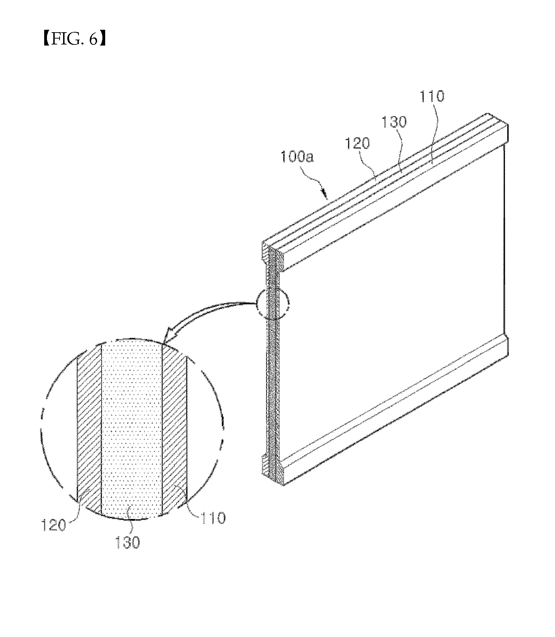

FIG. 5 is a perspective view showing a process of positioning a first protection cover and a second protection cover to outer edges of a substrate, FIG. 6 is a perspective view of a liquid crystal display panel which has been etched in a state of being provided with a first protection cover and a second protection cover, and FIG. 7 is a sectional view showing a bended state of a liquid crystal panel by a bending unit.

FIG. 8 is a sectional view showing processes for attaching a first guide member, a second guide member and a polarizer to a bended liquid crystal panel, and FIG. 9 is a sectional view showing a process of injecting light transmitting reinforcing material to a side spacer.

A method for manufacturing a curved display panel using a curved display panel manufacturing apparatus including an etching device according to an embodiment of the present invention, as shown in FIG. 4 to FIG. 9, is a curved display manufacturing method of etching while protecting weak edges of the liquid crystal panel 100a (referring to FIG. 5) including the first substrate 110 and the second substrate 120 which are formed of glass and are disposed to face one another and a liquid crystal layer which is formed between the first substrate 110 and the second substrate 120 and forming a display panel having a desired curved-shape.

The first substrate 110 may be referred to as a thin film transistor array substrate, and the second substrate 120 may be referred to as a color filter array substrate. At edges of the two substrates 110 and 120, a sealant (not shown) which is made of material for bonding the two substrates 110 and 120 and forms a space which is filled with liquid crystal, and the liquid crystal is prevented from being leaked by the sealant.

Hereinafter, referring to FIG. 4 to FIG. 9, a method for manufacturing a curved display panel using a curved display panel manufacturing apparatus including an etching device according to an embodiment of the present invention will be explained by stages.

The method includes a step S110 (from (a) to (b) in FIG. 5) of disposing the edge protection cover 210 at an outer surface edge of the first and the second substrates 110 and 120, a step S 120 (from (b) in FIG. 5 to FIG. 6) of paring partially outer portions of the first substrate 110 and the second substrate 120 using the injection nozzle 220 in a state of disposing the edge protection cover 210 such that the thicknesses thereof are reduced to predetermined thicknesses, a step S130 (from FIG. 6 to FIG. 7) of bending the flat liquid crystal panel 100a to a desired curved shape, a step S140 (FIG. 8) of attaching a first guide member 140 which is formed to have a shape corresponding to the desired curved shape to the pared outer surface of the first substrate 110 with a predetermined gap therebetween and attaching a second guide member 150 which is formed to have a shape corresponding to the desired curved shape to the pared outer surface of the second substrate 120 with a predetermined gap therebetween, and a step S150 (FIG. 9) of forming light transmitting reinforcing layers 160 respectively in a space between the first guide member 140 and the first substrate 110 and a space between the second guide member 150 and the second substrate 120.

In the step S110 (from (a) to (b) in FIG. 5) of disposing the edge protection cover 210, the first edge protection cover 211 is disposed to cover both the one outer surface edge (left edge in the drawing) of the first substrate 110 and the corresponding one outer surface edge (left edge in the drawing) of the second substrate 120 at the same time, and the second edge protection cover 212 is disposed to cover both the other outer surface edge (right edge in the drawing) of the first substrate 110 opposing to the one outer surface edge and the other corresponding outer surface edge (right edge in the drawing) of the second substrate 120. Accordingly, since the one edge of the first substrate 110 and the one edge of the second substrate 120 are protected at the same time, manufacturing time and cost can be reduced. In addition, since the other edge of the first substrate 110 and the other edge of the second substrate 120 are protected at the same time, manufacturing time and cost can be reduced.

In the step S 120 (from (b) in FIG. 5 to FIG. 6), etchant is injected via the injection nozzle 220 in order to pare outer portions of the first substrate 110 and the second substrate 120. Further, it is preferable that upper end edges and lower end edges of the substrates 110 and 120 are not pared in paring partially outer portions of the first substrate 110 and the second substrate 120. For example, this can be obtained by the use of an etchant blocking member (not shown) or by regulating etchant injection position. The reason of not to pare the upper and lower portions is that driving circuits including PCB (Printed Circuit Board) with drivers and various circuit elements for driving the display panel may be connected to an upper end edge or a lower end edge of the display. In addition, since the upper and lower end edges of the substrates are not pared, the upper and lower end edges may be used as mounting positions during attaching the first guide member 140 and the second guide member 150 to the outer surfaces of the first substrate 110 and the second substrate 120 with predetermined gaps.

Further, in the step S120 (from (b) in FIG. 5 to FIG. 6) of paring partially the outer portion, the predetermined thickness may be within a range of 50 to 200 µm. If the thickness of the first substrate 110 and the second substrate 120 after being pared is less than 50µm or greater than 200 µm, they may be broken during being bent or may be difficult to be bent. That is, since the thickness of the first substrate 110 and the second substrate 120 after being pared is between 50 to 200µm, the first substrate 110 and the second substrate 120 can be bent without being broken.

As shown in FIG. 7, the desired curved shape may be a circular arc or a curved surface without an inflection point, and may also be S-shaped shape or a curved shape having one or more inflection points. That is, the desired curved shape may be variously altered.

In the step S130 (from FIG. 6 to FIG. 7) of bending to the desired curved shape, in order to maintain the bent state of the display panel 100a after the bending the display panel, it is necessary to form the light transmitting reinforcing layer 160 on the outer surfaces of the first substrate 110 and the second substrate 120.

In order to stably form the light transmitting reinforcing layer 160, as shown in FIG. 8, the first guide member 140 and the second guide member 150 which can maintain the flat display panel 100a to be bent are attached to the outer surfaces of the first substrate 110 and the second substrate 120, and this is performed in the step S140 (FIG. 8) of attaching the guide member.

At this time, the first guide member 140 and the second guide member 150 are plate members made of transparent or semi-transparent material such as glass or synthetic resin, and may be attached to the outer surfaces of the first substrate 110 and the second substrate 120 by OCA (Optically clear adhesive) or the like.

In order to secure spaces in which the light transmitting reinforcing layer 160 is formed between the first guide member 140 and the first substrate 110 and between the second guide member 150 and the second substrate 120, the first guide member 140 and the second guide member 150 are respectively attached to the first substrate 110 and the second substrate 120 with predetermined gaps therebetween.

At this time, the predetermined gap may be a gap corresponding to the thickness of a pared portion of the first substrate 110 and the second substrate 120. Preferably, the predetermined gap may be a gap which allows the light transmitting reinforcing layer 160 to be formed therein, and may be a gap by which the light transmitting reinforcing layer 160 may disperse or absorb the stress generated in a state of being bent.

In the step S150 (FIG. 9) of forming the light transmitting reinforcing layer, in order to form the light transmitting reinforcing layer 160 in the space of the predetermined gap, light transmitting reinforcing material 161 is inserted through an insertion hole 181a. That is, the light transmitting reinforcing layer 160 may be formed by covering the light transmitting reinforcing material 161 is formed on the outer surface of the first substrate 110 and the second substrate 120 in a state that the first substrate 110 and the second substrate 120 are being bent by the first guide member 140 and the second guide member 150 and then curing the light transmitting reinforcing material 161.

At this time, the light transmitting reinforcing material 161 may be material which can form the reinforcing layer having the light transmitting characteristics, e.g., transparent polymer, glass bonding, or the like. Accordingly, the light transmitting reinforcing layer 160 may be a transparent polymer layer or a glass bonding layer. In addition, the transparent polymer may be any transparent or semi-transparent polymer such as transparent UV resin. Further, the light transmitting reinforcing layer 160 may be transparent so as to transmit fully light, and if necessary, may be a semi-transparent so as to transmit a portion of light.

Since the light transmitting reinforcing material 161 is being cured, it adheres to the outer surfaces of the light first substrate 110 and the second substrate 120, after the light transmitting reinforcing layer 160 is formed, the first substrate 110, the second substrate 120, and the light transmitting reinforcing layer 160 can be maintained in the desired curved shape.

If the first substrate 110 and the second substrate 120 are bent after being paring the outer surface thereof, they can be bent, but stress force acts. Referring to FIG. 7, the inner side of the first substrate 110 and the outer side of the second substrate 120 which are convex are under tensile stress, and the outer side of the first substrate 110 and the inner side of the second substrate 120 which are concave are under compressive stress. At this time, as shown in FIG. 9, if the light transmitting reinforcing material 161 is inserted and cured, the light transmitting reinforcing material 161 is changed into the light transmitting reinforcing layer 160 which are attached to the outer surfaces of the first substrate 110 and the second substrate 120, so as to disperse or absorb the stress acting on the substrates.

As described above, after parting partially an outer portion of the first substrate 110 and the second substrate 120 to reduce the thickness thereof, by bending the display panel to the desired curved shape, and then by attaching the guide members 140 and 150 and forming the light transmitting reinforcing layer 160, the first substrate 110 and the second substrate 120 can be maintained to the desired curved shape.

Furthermore, a method for manufacturing a curved display panel using a curved display panel manufacturing apparatus including an etching device according to an embodiment of the present invention, as shown in FIG. 8, may further include a step of attaching a polarizer 170 to one or more of the outer surfaces of the first guide member 140 and the second guide member 150.

The polarizer 170 may be attached to the respective outer sides of the first guide member 140 and the second guide member 150 (referring FIG. 9), or not shown in the drawing may be attached to one of the first guide member 140 and the second guide member 150. As another example, not shown in the drawing, the first guide member 140 and the second guide member may be a polarizer. In this case, the polarizer 170 is not provided.

The first guide member 140 and the second guide member may be made of glass or acrylic (PMMA, PolyMethly MethAcrylate).

In addition, in the step S150 (FIG. 9) of forming the light transmitting reinforcing layer according to a curved display panel manufacturing method according to an embodiment of the present invention, when the light transmitting reinforcing layer 160 is formed by inserting the light transmitting reinforcing material 161 into a space formed by the predetermined gap, the shape of the light transmitting reinforcing layer 160 cannot be maintained by itself before the light transmitting reinforcing material 161 is cured. Accordingly, in order to maintain the shape of the light transmitting reinforcing layer 160, as shown in FIG. 8, by disposing respectively the side spacers 181 at the inner edges of the first guide member 140 and the second guide member 150, the light transmitting reinforcing material 161 can be prevented from being leaked to the side before being cured.

In addition, as shown in FIG. 9, the side spacer 181 may include an insertion hole 181a through which the light transmitting reinforcing material 161 is inserted. Not shown in the drawing, after the light transmitting reinforcing material 161 is inserted through the insertion hole 181a, the insertion hole 181a may be closed for stable forming of the light transmitting reinforcing layer 160.

As such, after reducing the thickness of the first substrate 110 and the second substrate 120 of the conventional display panel by removing partially an outer portion thereof in a state of disposing the edge protection cover 210 at outer surface edge of the first substrate 110 and the second substrate 120, and in a state of bending the display panel, the guide members 140 and 150 are attached and the light transmitting reinforcing layer 160 is formed, so the display panel having a curved surface can be easily fabricated, and while the outer portion of the substrate is being partially etched, it can be prevented that the outer surface edges of the substrates 110 and 120 are destroyed or unevenly pared.

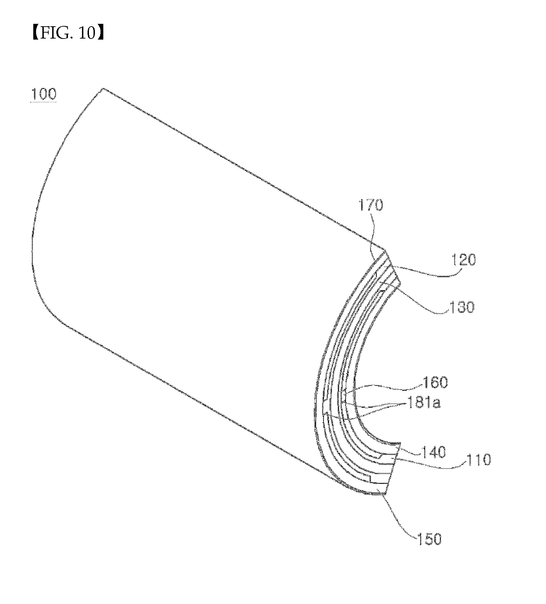

Meanwhile, FIG. 10 is a perspective view schematically showing a curved display pan el which is produced by an etching device according to an embodiment of the present invention, a curved display panel manufacturing apparatus including the same and a curved display panel manufacturing method using the same.

By a method for manufacturing a curved display panel using a curved display panel manufacturing apparatus including an etching device according to an embodiment of the present invention, the curved display panel 100 shown in FIG. 10 is manufactured.

As such, an etching device according to an embodiment of the present invention, a curved display panel manufacturing apparatus including the same, a curved display panel manufacturing method using the same, and a curved display panel manufactured by this may have following effects.

According to an embodiment of the present invention, since the edge protection cover 210 is provided at outer surface edge of the substrates 110 and 120 and the injection nozzle 220 for injecting etchant EL toward the edge protection cover 210 and portions of the outer surfaces of the substrates 110 and 120, when the etchant EL is injected through the injection nozzle 220, the etchant EL which is injected onto the portion of the outer surfaces of the substrates 110 and 120 is being injected in a state of maintaining its injection speed, and the etchant EL which is injected onto the outer surface edge which is covered by the edge protection cover 210 is being injected in a speed which is reduced by the edge protection cover 210, so while the outer portions of the substrates 110 and 120 are effectively pared, it can be prevented that the outer surface edges of the substrates 110 and 120 are destroyed or unevenly pared. Accordingly, defects of the curved display panel 100a due to this can be minimized.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a curved display panel manufacturing apparatus and can be used for manufacturing a display panel having a curved shape, so the present invention has an industrial applicability.

## Claims

1. A curved display panel manufacturing apparatus comprising:
an etching portion for partially paring outer portions of a first substrate and a second substrate to reduce thicknesses thereof predetermined thicknesses; and
a bending portion for bending the partially pared flat liquid crystal panel to a desired curved shape,
wherein the etching portion comprises:
at least one edge protection cover which is disposed on outer surface edge of the first substrate and the second substrate; and
an injection nozzle which injects etchant to outer surfaces of the first substrate and the second substrate and to the edge protection cover.

2. The curved display panel manufacturing apparatus of claim 1, wherein the edge protection cover is made of porous material.

3. The curved display panel manufacturing apparatus of claim 2, wherein the edge protection cover is made of a carbon fiber mesh.

4. The curved display panel manufacturing apparatus of claim 1, wherein the at least one edge protection cover comprises:
a first protection cover which covers both one outer surface edge of the first substrate and corresponding one outer surface edge of the second substrate at the same time; and
a second protection cover which covers both the other outer surface edge of the first substrate which faces the one outer surface edge and corresponding the other outer surface edge of the second substrate at the same time.

5. A curved display panel manufacturing method using a curved display panel manufacturing apparatus of one of claim 1 to claim 4, comprising:
positioning the edge protection cover to the edges of the first and the second substrates;
paring partially outer portions of the first substrate and the second substrate so as to reduce thicknesses thereof to predetermined thicknesses; and
bending the partially pared flat liquid crystal panel by the bending portion to a desired curved shape.

6. A curved display panel which is manufactured by the curved display panel manufacturing method of claim 5.

7. An etching device comprising:
at least one edge protection cover which is positioned at outer surface edge of a first substrate and a second substrate; and
an injection nozzle which injects etchant to outer surfaces of the first substrate and the second substrate and to the edge protection cover.

8. The etching device of claim 7, wherein the edge protection cover is made of porous material.

9. The etching device of claim 8, wherein the edge protection cover is made of carbon fiber mesh.

10. The etching device of claim 7, wherein the at least one edge protection cover comprises:
a first protection cover which covers both one outer surface edge of the first substrate and corresponding one outer surface edge of the second substrate at the same time; and
a second protection cover which covers both the other outer surface edge of the first substrate which faces the one outer surface edge and corresponding the other outer surface edge of the second substrate at the same time.
